# EUROPEAN PATENT APPLICATION

(11) **EP 4 404 012 A2**
(43) Date of publication of application: **24.07.2024**
(21) Application number: 24179893.3
(22) Date of filing: 26.09.2019
(51) Int. Cl.: G05B 19/418

(54) **METHOD FOR PACKAGING PIECES BY MEANS OF A MANIPULATOR ROBOT AND HEAD FOR FASTENING AND TRANSPORTING SAID PIECES BY MEANS OF THE MANIPULATOR ROBOT**

(62) Divisional of application: 19946724.2
(71) Applicant: Financiera Maderera S.A., 15707 Santiago de Compostela (A Coruña) (ES)
(72) Inventor: GONZALEZ PICHEL, Jose, 15707 Santiago de Compostela (A Coruña) (ES)
(74) Representative: Herrero & Asociados, S.L.

(57) **Abstract**

The invention relates to a head (14) for fastening and transporting parts, attachable to a robot (1) manipulator especially adapted for handling and packaging parts, the head (14) comprising:
- a main body adapted to be fixed to the robot (1) manipulator;
- fastening means of the main body to the robot (1) manipulator;
- vacuum fastening means attached to the main body; and
- at least one perimeter arm, subject to the main body, articulated to it and with the power to be movable, which incorporates between the main body and the perimeter arm, displacement means, which produce an approach or distance of said perimeter arm with respect to the main body,
being the fastening head (14) adaptable to different sizes and shapes of parts (3) to fasten and transport them.

## Description

### TECHNICAL FIELD OF THE INVENTION

The object of the present invention falls within the technical field of automation of packaging processes in which a product is formed by the assembly of a series of simple parts that are included in a package, box, container pallet, cluster or receptacle that serves to bind these parts together before dispatch to the final consumer or before being sent to an intermediate point in the production chain.

This invention is also part of the field of artificial vision technology and digital image processing and how this technology can help to pack products in different ways, which until now could only be done by human labor or by robotic facilities extremely bulky.

### BACKGROUND OF THE INVENTION

In the industrial processes currently carried out by companies, little importance is usually given to the final packaging of the products or their packing, since this task is often carried out manually by a series of operators in charge of packaging each package, wrapper or packaging unit, the products to contain, which can range from a set of parts all the same to be contained in that packaging and where the number of parts introduced must be controlled, to the making of packages with a number of parts and different shapes.

The manual making of these packages has shown over time that numerous setbacks or defects occur, either due to the lack of any of the elements to be contained in the package or due to the introduction of excess elements, which results in in one case, in customer complaints or, on the contrary, in the extra cost of the final products by having to oversize the production of parts and materials.

The problem increases when the packaging is, for example, a piece of furniture, which comes disassembled and ready for assembly by the end user and the components of the packaging are missing or changed.

There are companies that have assembly lines exclusively to make packaging for their products, lines that begin with the making of the packaging box itself, successively passing through loading stations where the elements to be included in each box are placed. These loading stations simply place the part or parts on top of the package or parts previously placed and finally go through a final stage of closing the flaps of the package and labeling the package.

These packaging lines, designed exclusively for one product, are already programmed at each station, regarding how the packaging should enter and stop at the station, the number of parts placed in the packaging at each station and the order in which the parts are placed per station. These described systems are purely mechanical, so that the positioning and adjustment of the part and the box, require physical mechanical positioning (centers, aligners, etc.), requiring these installations a lot of space as well as being expensive.

In recent years, a technology has been developed, called "Bin Picking", which uses a technology based on a robotic system guided by 3D vision. "Bin Picking" is a vision-guided robotic system that allows locating and extracting parts randomly arranged in containers or pallets. It uses a vision system (hardware and software) for the recognition and location of the parts and a robotic system for the automatic collection and subsequent relocation of the same.

The "Bin Picking" applications integrate an artificial vision system for robot guidance, capable of detecting parts in disorganized environments and communicating to the robot the exact 3D position of the parts, their orientation and dimensions. The system determines which parts are manipulable to extract them with precision and the robot performs the collection of the parts without collisions in an environment such as pallets or containers.

The "Bin Picking" technology, for example, is used in the fruit and vegetable industry, to order various products in packaging, such as oranges, fruits, vegetables in transport boxes with alveoli where the products are individually placed while they are protected from possible shocks during transport.

This technology is also used in the mechanical industry, for example for the supply of parts in a production line where a robot manipulator identifies and collects parts from a messy storage of parts to supply them individually to specific points in the manufacturing chain.

There are quite a few technological fields in which Bin Picking technology is currently being used, although its use entails certain limitations, which this patent attempts to solve.

The purpose of the invention is to use the "Bin Picking" technology, adapting this technology to the filling of packages where the parts included are of different shapes and sizes, which may or may not come clustered by shapes and sizes, although they are normally placed randomly.

It is also the purpose of the invention the possibility to fill packages that could arrive in multiple positions, without the rigidity of the box being mechanically aligned.

Lastly, it is the aim of the invention to create a flexible system that allows it to be adapted to different packages to be produced, the system identifying the type of package to be filled and inserting the parts necessary for its assembly inside it.

The purpose of the invention is to develop a head for fastening and transporting parts adapted to the robot for handling them, which adapts to any type and morphology of the parts to be handled, from flat parts to parts with a prismatic section and difficult to be held, either because of its porous morphology or its dimensions.

### DESCRIPTION OF THE INVENTION

The present invention relates to a procedure of packaging parts using a robot manipulator, which collects parts from a first storage where the parts are disorderly and/or randomly arranged, and from there, collect them and place them in a second storage with a pre-established order.

This second storage medium can be a static fixed point or that second storage is placed on a moving conveyor belt, the system knowing the exact position and orientation of this second storage by means of the image captured by, at least, a camera located on the belt and an encoder arranged on the conveyor belt. This camera located on the belt can be a 2D or 3D camera, depending on the circumstances of the installation and the data or coordinates to be processed.

This second storage medium can be made up of boxes, pallets, containers, receptacles in general, although the possibility of cluster them is not ruled out, which are later wrapped, shrink-wrapped, bagged or even covered in plastic, forming this second storage medium.

This procedure is suitable for forming a package such as a packaging box that contains the necessary parts to form an assembled assembly, for example, a piece of furniture made up of several parts, all of them the same or different, including fixing means, mounting tools, etc.

The procedure disclosed comprises the following phases:
- Recognition of the parts placed in the first storage by using at least one 3D camera that captures the image of the storage. This storage can be a pallet where a single type of stacked parts comes or more than one type of parts, it could be several pallets with different types of parts, or other storage media such as boxes, container tanks, etc.
- Capture of the image obtained from the selected part by at least one 3D camera. To this end, one or multiple 3D cameras are arranged in a frame, in such a position, that they can focus on the parts placed in that first storage. The use of 3D cameras makes it possible to obtain both a flat image of the surface of the object and its Z coordinate, understanding Z coordinate as the height coordinate, thickness of the part with reference to a captured surface, that is, a three-dimensional image of the part captured, which makes it easier to identify in that stack of the first storage, those parts that are placed on the surface of the stack, from those that are in a lower position, so that the system preferentially selects those that are in the upper zone. Another way of placing the 3D camera that captures the image of the first storage is having it on the head of the part collecting robot.
- Treatment and identification by the 3D camera of the height of the parts located in the first storage, to select, in the first place, those in the upper part, digital treatment of the image by means of recognition of point clouds by heights of height and recognition of edges of the parts, individually.

This has already been said in the previous item since it is interesting to collect the parts placed on its upper part.
- Comparison of the image obtained and digitized, with a digitized pattern of the part, pattern that will have been initially recorded to the process and that will be saved by the system, as well as the rest of the images of the parts necessary to form the content of the second storage medium.
- Completion of the image obtained with the data of the pattern to obtain a complete image of the part to collect. This phase is used so that once the part has been identified with the pattern, the points that may have remained undefined are completed with those pre-recorded from the pattern to use that image from that moment on as the image captured by the 3D cameras.
- Identification of the geometric center of the selected part by digital processing of the captured image. This digital treatment can be carried out based on the contour of the captured image, which will define the point of attachment by the robot manipulator, which may be the geometric center.
- Transmission to the robot manipulator of the collecting coordinates of the part.
- Collection of the parts by the robot manipulator head and alignment of the coordinates of the arm with the part. The collection of the parts is completed with the transfer and placement on a second storage for which this second storage consists of a fixed point where the parts transported by the robot manipulator are placed or it consists of a packaging box, preferably cardboard, suitable for placing and transporting the packed parts.

This collection of the parts procedure is completed with the following phases:
- identification of the contour and positioning of the second storage, by means of a camera, which identifies the characteristics and orientation of this second storage, said camera being able to be a 2D or 3D camera, as required by the installation and the necessary data to be processed by the system.
- entry of the second storage medium in the action area of the robot manipulator. This entry can be by means of the static placement of this second storage medium in the robot's action area, or by means of a moving conveyor belt, while this second storage is advancing, the robot places the parts inside it. In order for the system and the robot to determine the position and orientation of this second storage medium, an encoder arranged on the conveyor belt is included, which, together with the image captured by the camera, enables the system to know its position and orientation at all times.
- transfer of the parts collected by the arms of the robot manipulator to the second storage.
- placement of the parts transferred by the robot manipulator in the second storage, following a pattern placement of the parts inside it. The robot head places the parts inside the second storage medium, forming an angle in their introduction, to later position them flat in the packaging box. This introduction angle can be acute, which facilitates its introduction, or even flat if the part is easy to place. For example, in the case of large-sized flat parts, insertion is chosen at an acute angle and in parts such as plugs or strips or small flat parts, insertion is chosen at a flat angle parallel to the place plane of the second storage. The preferred acute angle of introduction between the part and the depositing plane can preferably be less than 15°, although the use of greater or lesser angles is not ruled out, depending on the parts to be deposited and the storage to be formed.
- retraction of the robot manipulator to collect a new part from the first storage, a part that has been previously recognized by the image captured by the 3D camera and digitally processed.
- optionally the repetition of the operations until completing the content of the second storage, and
- repetition of the process by filling successive second storages.

A quality control can be added to the parts packaging procedure that allows damaged parts to be removed and/or discarded, parts whose coloration is not appropriate with the rest of the parts in the packaging or parts that have been inserted by mistake and that should not be part of the packaging. If there are any discrepancies in the shape, color and/or texture of the image captured with the pattern, the part is discarded by the robot manipulator, removing it and avoiding its packaging.

The procedure as explained up to now has been based on the use of a robot, but it is understandable that when multiple parts are used in packaging, multiple robots can be used that sequentially place the selected parts on the second storages for the making of the final storage, passing this second storage through the successive robots for the depositing, stacking and placing of the parts.

Finally, these second means of storage can consist of a packaging box, preferably cardboard, suitable for transporting the packed parts, such as laminar parts of wood that make up the parts of a piece of furniture to be assembled, although it is not ruled out the possibility of making clusters that are later wrapped, shrink-wrapped, bagged or even covered in plastic, forming this second storage medium.

The object of the invention is the head for fastening and transporting parts attachable to a robot manipulator, a head specially adapted for handling parts, preferably wood, with both wood parts and parts made up of fiber mixtures falling within that definition and/or wood particles, although the making of parts of other materials such as synthetics is not ruled out, which includes:
- a main body adapted to be fixed to the robot manipulator;
- fastening means of the main body to the robot manipulator;
- vacuum fastening means attached to the main body; and
- at least one perimeter arm, subject to the main body, articulated to it and with the power to be movable, incorporating between the main body and the perimeter arm, displacement means, which produce an approach or distance of said perimeter arm with respect to the main body.

The fastening head is adapted to different sizes and shapes of parts to fasten and transport them.

By the term "perimeter" it must be understood that this term refers to the placement of said arm on the perimeter of the head and that its connection to the main body is made by means of radial arms that come out of it.

A preferred embodiment of the head for fastening and transporting parts, adapted to a robot manipulator, foresees that at least one perimeter arm incorporates at least one vacuum fastening system, with which the head can fasten the part and transport it to its destination.

This perimeter arm may not be unique and several arms may be placed at diametrically opposite points of the fastening head, these articulated perimeter arms being arranged independent of the main body of the head.

This or these perimeter arms articulated to the central body of the head, can be at least double and each of them can end in at least one vacuum fastening system, such as a suction cup.

The number of perimeter arms can vary from one to as many as necessary and will depend on the parts to be handled, for example, for handling large parts it may be necessary to include two, four or more perimeter arms, trying to cover a large surface of the part to be handled and making both the collection of the part and its transport and depositing of the same in the second means of packaging more stable.

This described arm is adapted to the fastening and transport of laminar parts, for which the fastening and vacuum suction systems of the same are shown as a suitable solution for said handling and transport operation.

A second embodiment of the arms foresees that on the opposite side to the perimeter arm there is another perimeter arm activated preferably by compressed air, both of which can be moved between a more distant position and a closer one, prehensile between both arms, carrying out a collection effect of the part not by compressed air but mechanically by the arms.

The vacuum fastening system is attached to the main body of the robot manipulator head, by means of displacement guides, allowing a relative linear movement between said vacuum fastening system and the main body of the robot manipulator head.

This described second embodiment of the head is especially adapted to the fastening and transport of parts with a prismatic section, preferably with a porous appearance, for which these side arms are helped to make a mechanical prehensile action of the same and therefore it is suitable for the handling and transport of this type of parts, such as, for example, packaging blocks that are elongated and with a reduced prismatic section with respect to their length.

### DESCRIPTION OF THE DRAWINGS

In order to help a better understanding of the characteristics of the invention according to a preferred example of its practical embodiment, and to complement this description, the following figures are attached as an integral part of the same, whose character is illustrative and not limiting:
Figures 1 to 3 show three sequential images of the part packaging procedure from a first storage to a second storage.
Figures 4 to 6 show three sequential views of the filling of a second package and how the parts are ordered according to an established pattern.
Figure 7 shows how the robot manipulator collects the parts from a first storage and how the digitized image of said stack captured by the 3D cameras is observed.
Figures 8 and 9 represent the real image of a first stacking of parts in height and which is the image captured by the 3D cameras and the digitized image in height identified by the software.
Figure 10 represents a plan image of a schematic installation with two robotic stations for filling the second storages.
Figure 11 represents the embodiment of a head with two perimeter arms for fastening and transporting parts, adapted to a robot manipulator.
Figure 12 represents the embodiment of a head with four perimeter arms for fastening and transporting parts, adapted to larger and/or heavier parts.
Figure 13 represents a second embodiment of a head with two peripheral arms adapted to carry out between them a mechanical prehensile action on the object to be handled and transported.
Figure 14 shows the same representation of the head of figure 13 without representing the part that it holds as figure 13 does.

### PREFERRED EMBODIMENT OF THE INVENTION

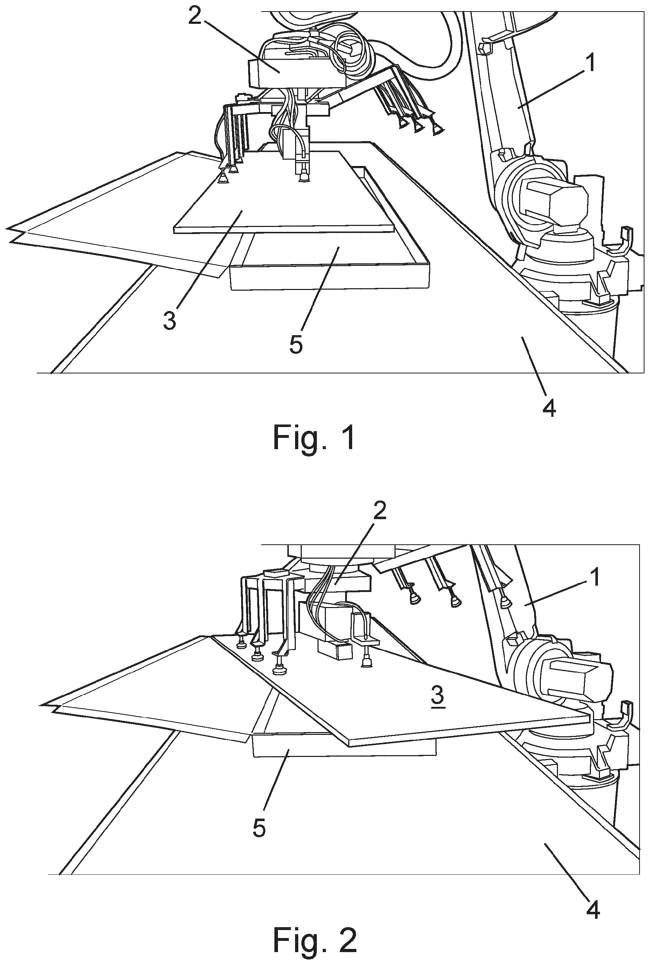

Figures 1 to 3 show three sequential images of the parts packaging procedure, from a first storage, not shown in the figures, to a second storage (5), which in this case is represented by a cardboard box used as packaging of the parts to assemble.

Thus, these figures show the body of a robot (1) with a head (2) that collects a part (3) and places it in the second storage (5), which in this case is placed on a conveyor belt (4).

The robot (1) has the position of the second storage (5) located at all times by incorporating a 2D or 3D camera that allows its position to be digitized and by incorporating an encoder on the conveyor belt (4) itself. Both elements, 2D or 3D camera and encoder, are not shown in the provided drawings.

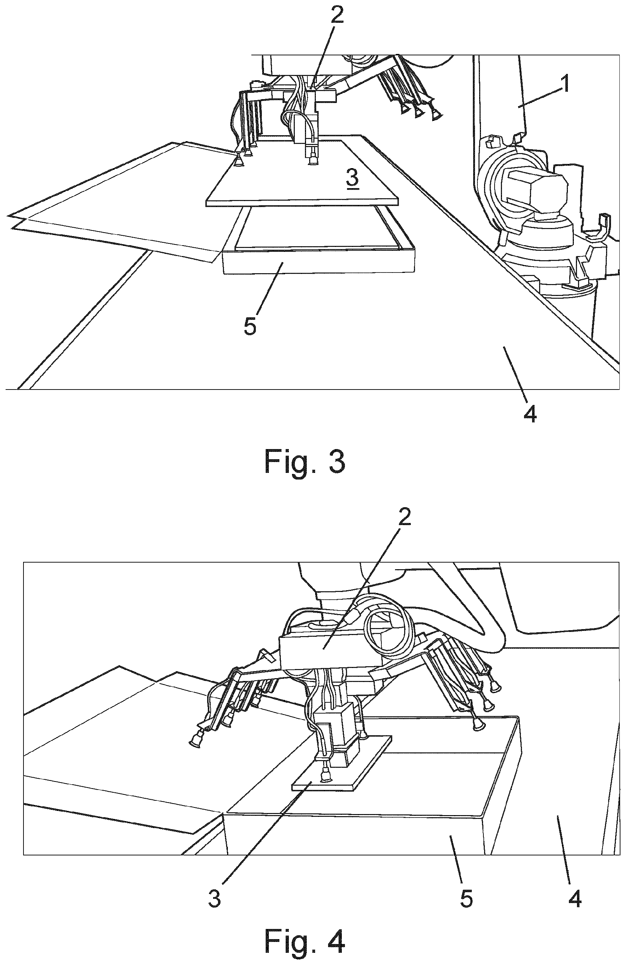

Figure 2 shows the progress of the robot head with a part (3) to place on top of another already placed in the second storage (5), while figure 3 shows the alignment that the robot (1) makes of the part with the edges of the second stacking before depositing it inside it.

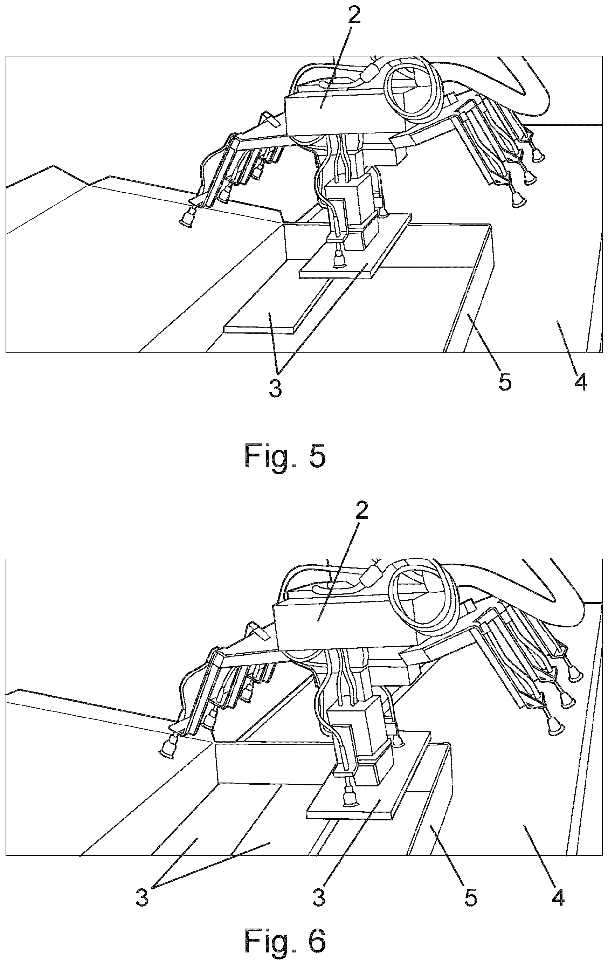

Figures 4 to 6 show three sequential views of the filling of a second storage (5) and how the parts (3) are arranged according to an established pattern, in this case it is observed how the head (2) of the robot (1) places three parts (3) inside the second storage (5) contiguously and following an established pattern of placement of the parts (3) inside the second storage (5). Although it is not observed in such images, the second storage (5) is moving on top of the conveyor belt (4) and, as it can be seen, this second storage (5) does not need to have a predetermined placement and orientation position, since the 2D/3D camera and the conveyor belt encoder provides the robot (1) with the location coordinates of the second storage (5).

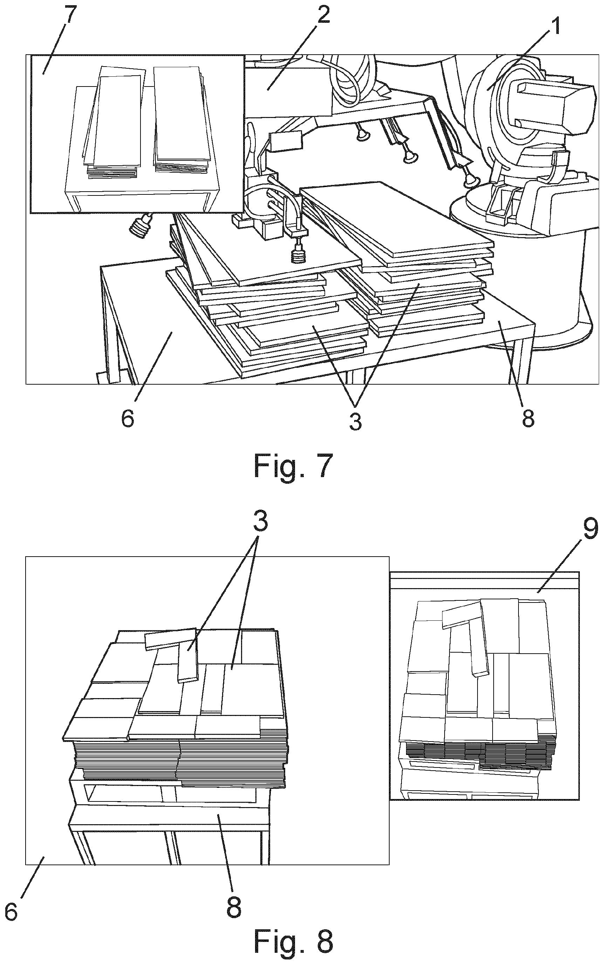

Figure 7 shows how the robot (1) manipulator collects the parts through its head (2), from a first storage (6), where the parts (3) are stacked in any order but clustered in height. In the upper left corner of this figure 7 it is shown the digitized representation captured by the cameras of the stack of parts (3), and how it identifies the contour and height of the same thanks to the use of the 3D cameras (not represented).

The identification of the edges of the parts (3) and their height manages, through digital treatment, to indicate the geometric center of the part (3) so that the robot head (2) can adapt to the dimensions of the part (3) and collect it safely for transport towards the second storage (5) as shown in figures 1 to 6.

In this figure, it can be seen how the first storage (6) of parts (3) is located on a table (8), but it could also be a pallet or a basket where such parts (3) had been placed.

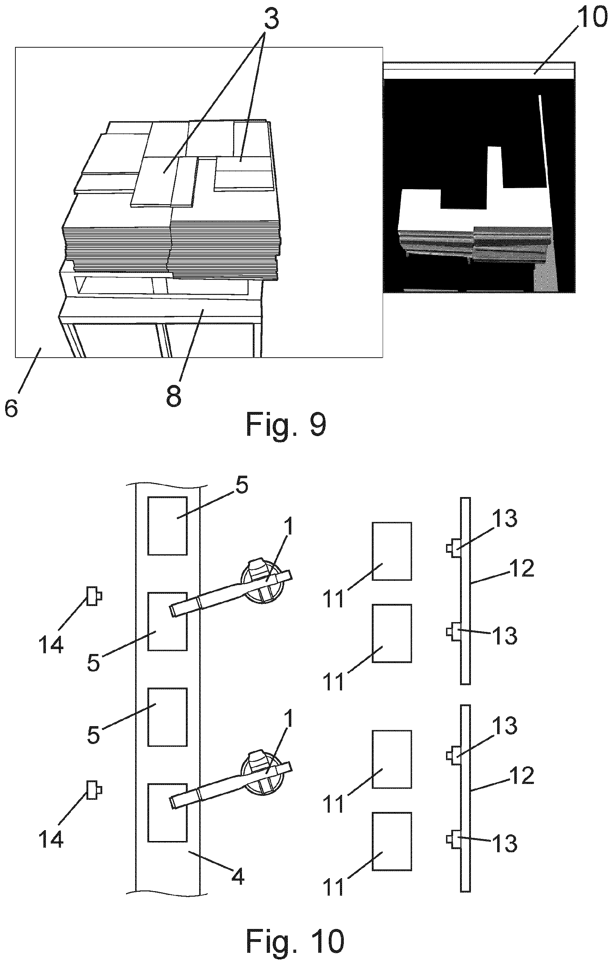

Figures 8 and 9 represent the real image of a first storage (6) of parts (3) in height, the first storage (6) whose images are shown in the form of a table (8) and where such parts (3) have multiple shapes that can be identified in their contours. In figure 8, the images on the right side of both figures show the image captured by the 3D cameras and, as in figure 9, that stacking image is transformed into a digitally processed image, which defines the edges of each part (3) individually, showing its edges and even its height, for which it can be used color codes that identify the different heights of the parts (3).

With the data of these images and those of the pattern, the system finishes profiling its contour of the part (3) and according to the necessary cluster in the second storage, the robot chooses the parts to be incorporated into the second storage (5).

The procedure, as explained up to now, has been based on the use of a robot (1) that places at least one different or similar part (3) inside the second storage (5), but it is understandable that when multiple parts (3) are used in the packaging, multiple robots (1) can be used that sequentially place the selected parts (3) on the second storage (5) for the making of the final storage, passing this second storage (5) through the successive robots (1) for the place of the parts (3) until reaching the end point of the chain where it actually closes the packaging and it is exited for its storage and/or sale.

Figure 10 shows a schematic representation of an installation made up of two robots (1) that collect the parts from first storages (11) of parts (3) (not shown) and place them in the second storages (5) to form these second storages. 3D cameras (13) are placed in frames (12) that capture the storages (11) of parts (3) and through digital image processing they are able to identify the edges of the parts (3) and the height of such parts.

Close to the second storages (5), there are 2D/3D cameras that, together with an encoder incorporated into the conveyor belt (4), allow the position and orientation of the second storage (5) to be identified.

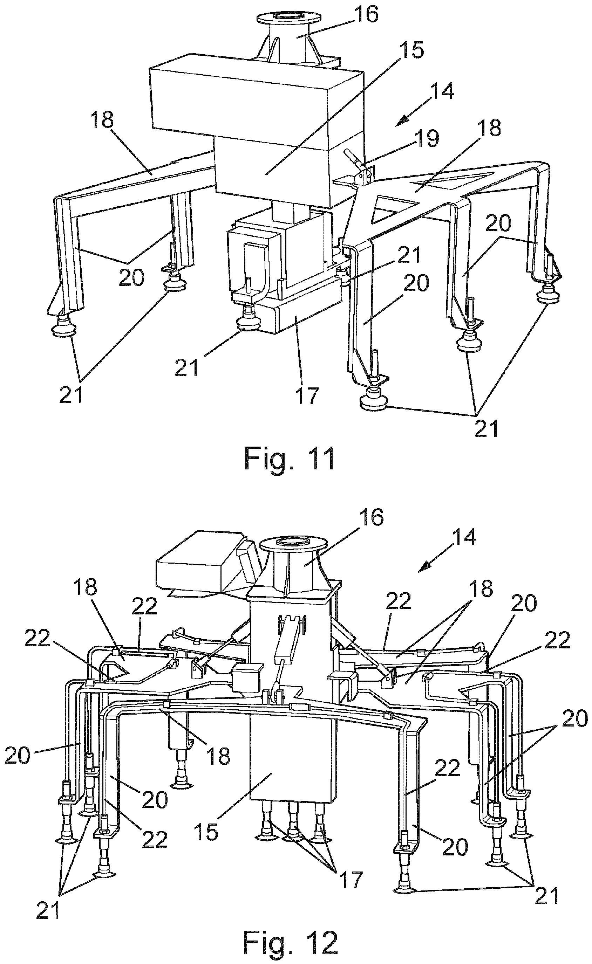

Figures 11 and 12 show a first embodiment of a head (14) comprising:
- a main body (15) adapted to be fixed to the robot manipulator (not shown),
- fastening means (16) of the main body to the robot manipulator,
- vacuum fastening means (17) attached to the main body (15) of the head (14),
- at least one perimeter arm (18), in this case figure 11 shows a version with two perimeter arms (18) and figure 12 shows another alternative version with four perimeter arms (18), attached to the main body (15), articulated to it and capable of being movable, incorporating displacement means (19) between the main body (15) and the perimeter arm (18), which produce an approach or distance of said perimeter arms (18) with respect to the main body (15). These displacement means (19) are represented in these figures by means of pneumatic pistons, but they can be replaced by any other pneumatic, hydraulic or mechanical means that perform the same function.

This head (14) is adapted for fastening parts of different sizes and shapes and is suitable for fastening and transporting them. In these figures it can be seen how, in figure 11, each perimeter arm (18) is triple, while that of figure 12 is double and each end (20) of the perimeter arms ends in a suction cup (21) attached to a vacuum conduit (22), only shown in Figure 12 and removed from Figure 11 for simplicity of the drawing, to effect the suction of the parts (not shown).

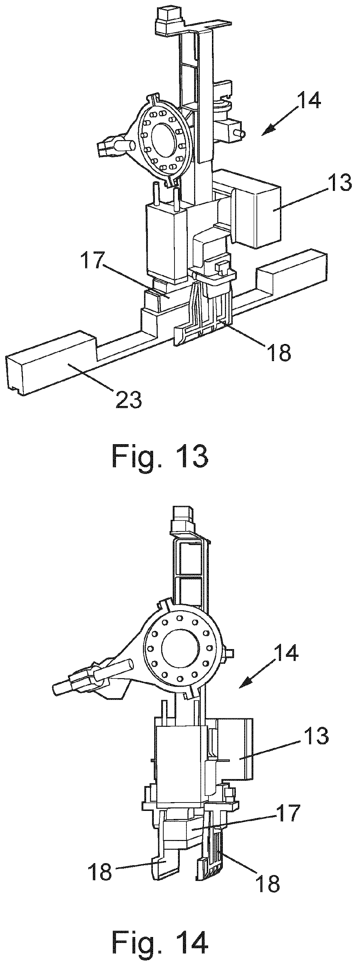

Figures 13 and 14 show a second embodiment of a head (14) with two perimeter arms (18) adapted to perform between them a mechanical prehensile action on the object to be handled and transported, the object to be handled being shown as the part (23), which in this case is a packaging block. Therefore, there is an action for the collection of the part (23) by means of vacuum and lifting means (17) and a prehensile action by means of the perimeter arms (18), which facilitate their handling and transport.

In this embodiment, the 3D cameras (13) are integrated into the head itself and not external to it.

This embodiment of the head is adapted to parts with a prismatic section and porous bodies, such as packaging plugs, strips, etc., where the fastening action by the vacuum and lifting means (17) are not sufficient and it is required a mechanical grip by perimeter arms (18) for the correct handling and transport.

## Claims

1. Head (14) for fastening and transporting packaging parts, attachable to a robot (1) manipulator especially adapted for handling and packaging parts, the head (14) comprising:
- a main body adapted to be fixed to the robot (1) manipulator;
- fastening means of the main body to the robot (1) manipulator;
- vacuum fastening means attached to the main body; and
- at least one perimeter arm, subject to the main body, articulated to it and with the power to be movable, which incorporates between the main body and the perimeter arm, displacement means, which produce an approach or distance of said perimeter arm with respect to the main body,
being the fastening head (14) adaptable to different sizes and shapes of parts (3) to fasten and transport them.

2. Head (14) according to claim 1 wherein:
- the at least one perimeter arm incorporates at least one vacuum fastening system;
- at diametrically opposite points of the fastening head there are articulated perimeter arms independent of the main body of the head;
- the at least one perimeter arm articulated to the central body of the head (14) is at least double and each of they end up in at least one vacuum fastening system; and
- which comprises a main body and at least two arms diametrically opposed to each other with respect to the main body.

3. Head (14) according to claim 1, wherein on the opposite side to the perimeter arm there is another perimeter arm activated preferably by compressed air, both of which can be moved between a more distant position and a closer position, prehensile between both arms; and wherein the drive of the perimeter arm can be mechanical by means of an electric motor.

4. Head (14) according to claims 2 and 3, wherein the vacuum fastening system is attached to the main body of the robot manipulator head by means of displacement guides, allowing a relative linear movement between said vacuum fastening system and the main body of the robot manipulator head.

5. Head (14) according to any of claims 1-4 which is adapted to fastening and transporting parts with a prismatic section.
